# EUROPEAN PATENT APPLICATION

(11) **EP 3 627 893 A1**
(43) Date of publication of application: **25.03.2020**
(21) Application number: 18817655.6
(22) Date of filing: 13.06.2018
(51) Int. Cl.: H04W 36/00

(54) **CELL HANDOVER METHOD, NETWORK DEVICE AND TERMINAL DEVICE**

(30) Priority: 16.06.2017 CN 201710461640
(71) Applicant: Huawei Technologies Co., Ltd., Longgang District Shenzhen, Guangdong 518129 (CN)
(72) Inventor: MIAO, Jinhua, Shenzhen Guangdong 518129 (CN); CHAI, Li, Shenzhen Guangdong 518129 (CN); QUAN, Wei, Shenzhen Guangdong 518129 (CN); ZHANG, Jian, Shenzhen Guangdong 518129 (CN)
(74) Representative: Maiwald Patent- und Rechtsanwaltsgesellschaft mbH
(86) International application number: PCT/CN2018/091111
(87) International publication number: WO 2018/228445

(57) **Abstract**

This application provides a cell handover method, a network device, and a terminal device. The method includes: receiving, by a first network device, a handover request message sent by a second network device, where the handover request message is used to request to hand over a terminal device from the second network device to the first network device; and sending, by the first network device, a handover response message to the second network device, where the handover response message includes a PDCP sequence number SN length supported by a packet data convergence PDCP layer of the first network device. According to the cell handover method in this embodiment of this application, a problem of a mismatch between sequence number SN lengths during a cell handover can be resolved, which helps improve data transmission reliability.

## Description

This application claims priority to Chinese Patent Application No. 201710461640.6, filed with the Chinese Patent Office on June 16, 2017 and entitled "CELL HANDOVER METHOD, NETWORK DEVICE, AND TERMINAL DEVICE", which is incorporated herein by reference in its entirety.

### TECHNICAL FIELD

This application relates to the communications field, and more specifically, relates to a cell handover method, a network device, and a terminal device.

### BACKGROUND

In a radio protocol stack of a long term evolution (long term evolution, LTE) system, after a packet data convergence protocol (packet data convergence protocol, PDCP) layer obtains an Internet protocol (internet protocol, IP) data packet from an upper layer, header compression and encryption may be performed on a PDCP service data unit (service data unit, SDU) of the IP data packet. A PDCP head (head) is added to the processed data packet, to form a PDCP protocol data unit (protocol data unit, PDU). Then the PDCP PDU is delivered to a radio resource control (radio link control, RLC) layer. The PDCP layer further provides a sequence-based submission function and a repeated packet detection function to the upper layer. Therefore, a PDCP head in each PDCP PDU includes a sequence number (sequence number, SN).

In a handover scenario of LTE, a terminal device is considered to hand over from a source base station to a target base station. However, different PDCP SNs may be configured in the source cell and the target cell. For example, a maximum length of an SN number set by a PDCP entity of the source base station is 15 bits, but a length of an SN number set by the target base station may be 12 bits. Consequently, the target base station cannot identify the SN number of the source base station. Therefore, there is an urgent need to propose a solution to resolve a problem of a mismatch between sequence number SN lengths during cell handover.

### SUMMARY

This application provides a cell handover method, a network device, and a terminal device, to resolve a problem of a mismatch between sequence number SN lengths during cell handover, which helps improve data transmission reliability.

According to a first aspect, a cell handover method is provided, including:
receiving, by a first network device, a handover request message sent by a second network device, where the handover request message is used to request to hand over a terminal device from the second network device to the first network device; and
sending, by the first network device, a handover response message to the second network device, where the handover response message includes a PDCP sequence number SN length supported by a packet data convergence PDCP layer of the first network device.

In this embodiment of this application, the first network device adds the PDCP SN length supported by the PDCP layer of the first network device to the handover response message to enable the second network device to send a handover command to the terminal device based on the PDCP SN length supported by the PDCP layer of the first network device, so that the terminal device configures a PDCP sequence number SN length to the PDCP SN length supported by the PDCP layer of the first network device. This resolves a problem of a mismatch between SN lengths during cell handover, which helps improve data transmission reliability.

In some possible implementations, the handover request message includes the PDCP SN length supported by the PDCP layer of the first network device, where the SN length supported by the PDCP layer of the first network device is less than a PDCP SN length supported by a PDCP layer of the second network device.

Optionally, the handover request message further includes indication information and/or time information of a handover condition of the terminal device, and the time information is information about time required for the terminal device to hand over based on the handover condition.

Optionally, the handover response message further includes indication information and/or time information of a handover condition of the terminal device, and the time information is information about time required for the terminal device to hand over based on the handover condition.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

In some possible implementations, the method further includes:
after receiving the handover request message sent by the second network device, starting, by the first network device, a first timer based on the time information, where running duration of the first timer is longer than the time required for the terminal device to hand over based on the handover condition.

In some possible implementations, the method further includes:
receiving, by the first network device during running of the first timer, a random access preamble sequence or data sent by the terminal device.

According to a second aspect, a cell handover method is provided, including:
sending, by a second network device, a handover request message to a first network device, where the handover request message is used to request to hand over a terminal device from the second network device to the first network device;
obtaining, by the second network device, first information, where the first information includes a PDCP sequence number SN length supported by a packet data convergence PDCP layer of the first network device; and
sending, by the second network device, handover signaling to the terminal device based on the PDCP SN length supported by the PDCP layer of the first network device.

In this embodiment of this application, the second network device obtains the PDCP SN length supported by the PDCP layer of the first network device, and can send a handover command to the terminal device based on the PDCP SN length supported by the PDCP layer of the first network device, so that the terminal device configures a PDCP sequence number SN length to the PDCP SN length supported by the PDCP layer of the first network device. This resolves a problem of a mismatch between SN lengths during cell handover, which helps improve data transmission reliability.

In some possible implementations, the obtaining, by the second network device, first information includes:
receiving, by the second network device, a handover response message sent by the first network device, where the handover response message includes the first information.

In some possible implementations, the handover request message includes a PDCP SN length supported by a PDCP layer of the second network device; and
the receiving, by the second network device, a handover response message sent by the first network device includes:
receiving, by the second network device, the handover response message sent by the first network device, where the SN length supported by the PDCP layer of the first network device is less than the PDCP SN length supported by the PDCP layer of the second network device.

Optionally, the handover request message further includes indication information and/or time information of a handover condition of the terminal device, and the time information is information about time required for the terminal device to hand over based on the handover condition.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

In some possible implementations, the obtaining, by the second network device, first information includes:
receiving, by the second network device, the first information sent by a core network device.

In this way, the second network device may obtain, in a plurality of manners, the PDCP SN length supported by the PDCP layer of the first network device.

Optionally, the handover signaling includes a first indication, the first indication is used to instruct the terminal device to configure a PDCP SN length to the PDCP SN length supported by the PDCP layer of the first network device, and the SN length supported by the PDCP layer of the first network device is less than the PDCP SN length supported by the PDCP layer of the second network device.

In some possible implementations, the method further includes:
receiving, by the second network device, a second indication sent by the terminal device, where the second indication is used by the terminal device to notify the second network device that the terminal device is to hand over to the first network device.

According to a third aspect, a cell handover method is provided, including:
receiving, by a terminal device, handover signaling sent by a second network device, where the handover signaling includes a first indication, the first indication is used to instruct the terminal device to configure a packet data convergence PDCP sequence number SN length to a PDCP SN length supported by a PDCP layer of a first network device, and the SN length supported by the PDCP layer of the first network device is less than a PDCP SN length supported by a PDCP layer of the second network device;
configuring, by the terminal device according to the first indication, the PDCP SN length of the terminal device to the PDCP SN length supported by the PDCP layer of the first network device; and
transmitting, by the terminal device, data based on the PDCP SN length supported by the PDCP layer of the first network device.

In this embodiment of this application, the terminal device receives a handover command sent by the second network device, where the handover command includes the first indication, and the first indication is used to instruct the terminal device to configure the packet data convergence PDCP sequence number SN length to the PDCP SN length supported by the PDCP layer of the first network device, so that the terminal device configures the PDCP sequence number SN length to the PDCP SN length supported by the PDCP layer of the first network device. This resolves a problem of a mismatch between SN lengths during cell handover, which helps improve data transmission reliability.

In some possible implementations, the method further includes:
when the terminal device meets a handover condition, sending, by the terminal device, a second indication to the second network device, where the second indication is used to notify the second network device that the terminal device is to hand over to the first network device; and performing a process of access to the first network device.

Optionally, the second indication may be CSI information, SR information, SRS information, or reserved sequence preamble information, such as a preamble allocated to the first network device for use; may be a MAC CE indication; or may be a special physical layer signal.

In some possible implementations, before the sending, by the terminal device, a second indication to the second network device, the method further includes:
obtaining, by the terminal device, the handover condition.

Optionally, the terminal device may obtain the handover condition by using the handover command; the terminal device obtains the handover condition by using a measurement configuration message delivered by the second network device; or the terminal device obtains the handover condition by using an RRC connection reconfiguration message delivered by the second network device. That is, a manner in which the terminal device obtains the handover condition is relatively flexible.

It should be noted that if measurement configuration information received by the terminal device includes a list of a plurality of cells, or if the terminal device finds, when performing measurement, that a plurality of cells meet a preset condition, the terminal device selects one target cell from the plurality of cells. Signal quality of the target cell may be the best in the plurality of cells, or a signal of the target cell may be the most stable in the plurality of cells (for example, signal quality strength is higher than a preset threshold in a preset time period). For example, the preset condition is an A3 event, where the A3 event means that the signal quality of the target cell is greater than a threshold of a serving cell.

Optionally, the handover condition includes at least one of the following conditions: signal quality strength of the first network device measured by the terminal device meets a preset threshold, a reference signal received power value of the first network device measured by the terminal device meets a preset value, and handover duration of the terminal device meets preset duration.

In some possible implementations, the transmitting, by the terminal device, data based on the PDCP SN length supported by the PDCP layer of the first network device includes:
determining, by the terminal device, a data protocol data unit PDU SN number or a hyper frame number HFN number of the data by using the PDCP SN length supported by the PDCP layer of the first network device; and transmitting the data by using the PDU SN number or the HFN number of the data.

According to a fourth aspect, a cell handover method is provided, including:
obtaining, by a terminal device, a handover command, where the handover command includes a handover condition; and
determining, by the terminal device, a target cell after determining that the handover condition is met.

Optionally, the terminal device determines the target cell in a plurality of cells. The plurality of cells may be a plurality of cells included in measurement configuration information; may be a plurality of cells that meet the handover condition and that are discovered by the terminal after the terminal receives the handover command; or may be a target cell list included in the handover command. This is not limited herein.

In this embodiment of this application, if the terminal device finds, when performing measurement, that the plurality of cells meet the handover condition, the terminal device selects a target cell from the plurality of cells. Signal quality of the target cell may be the best in the plurality of cells, or a signal of the target cell may be the most stable in the plurality of cells.

Optionally, if the measurement configuration information received by the terminal device includes a list of a plurality of cells, or if the terminal device finds, when performing measurement, that the plurality of cells meet the handover condition, the terminal device selects a target cell from the plurality of cells. Signal quality of the target cell may be the best in the plurality of cells, or a signal of the target cell may be the most stable in the plurality of cells (for example, signal quality strength is higher than a preset threshold in a preset time period). For example, the preset condition is an A3 event, where the A3 event means that the signal quality of the target cell is greater than a threshold of a serving cell, that is, the target cell is greater than the threshold of the serving cell in a predetermined time period. Whether signal quality of a cell is the best can be determined by using at least one of the following parameters: a reference signal received power (reference signal receiving power, RSRP) value, a reference signal received quality (reference signal receiving quality, RSRQ) value, a received signal strength indicator (received signal strength indication, RSSI) value, and the like.

Optionally, the terminal device obtains the handover condition by using a measurement configuration message delivered by a source network device; or the terminal device obtains the handover condition by using an RRC connection reconfiguration message delivered by a source network device. This is not limited herein.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

According to a fifth aspect, a cell handover method is provided, including:
obtaining, by a terminal device, a handover command, where the handover command includes a handover condition; and
when the terminal device meets the handover condition, sending, by the terminal device, a second indication to a second network device, where the second indication is used to notify the second network device that the terminal device is to hand over to a first network device; and performing a process of access to the first network device.

Optionally, the second indication may be CSI information, SR information, SRS information, or reserved sequence preamble information, such as a preamble allocated to the first network device for use; may be a MAC CE indication; or may be a special physical layer signal.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

According to a sixth aspect, a network device is provided, and is configured to perform the method in any one of the first aspect or the possible implementations of the first aspect. Specifically, the network device includes a module configured to perform the method in any one of the first aspect or the possible implementations of the first aspect.

According to a seventh aspect, a network device is provided, and is configured to perform the method in any one of the second aspect or the possible implementations of the second aspect. Specifically, the network device includes a module configured to perform the method in any one of the second aspect or the possible implementations of the second aspect.

According to an eighth aspect, a terminal device is provided, and is configured to perform the method in any one of the third aspect or the possible implementations of the third aspect. Specifically, the terminal device includes a module configured to perform the method in any one of the third aspect or the possible implementations of the third aspect.

According to a ninth aspect, a terminal device is provided, and is configured to perform the method in any one of the fourth aspect or the possible implementations of the fourth aspect. Specifically, the terminal device includes a module configured to perform the method in any one of the fourth aspect or the possible implementations of the fourth aspect.

According to a tenth aspect, a terminal device is provided, and is configured to perform the method in any one of the fourth aspect or the possible implementations of the fourth aspect. Specifically, the terminal device includes a module configured to perform the method in any one of the fourth aspect or the possible implementations of the fourth aspect.

According to an eleventh aspect, a network device is provided. The network device includes a processor, a memory, and a communications interface. The processor is connected to the memory and the communications interface. The memory is configured to store an instruction. The processor is configured to execute the instruction. The communications interface is configured to communicate with another network element under control of the processor. When the processor executes the instruction stored in the memory, the execution enables the processor to perform the method in any one of the first aspect or the possible implementations of the first aspect.

According to a twelfth aspect, a network device is provided. The network device includes a processor, a memory, and a communications interface. The processor is connected to the memory and the communications interface. The memory is configured to store an instruction. The processor is configured to execute the instruction. The communications interface is configured to communicate with another network element under control of the processor. When the processor executes the instruction stored in the memory, the execution enables the processor to perform the method in any one of the second aspect or the possible implementations of the second aspect.

According to a thirteenth aspect, a terminal device is provided. The terminal device includes a processor, a memory, and a communications interface. The processor is connected to the memory and the communications interface. The memory is configured to store an instruction. The processor is configured to execute the instruction. The communications interface is configured to communicate with another network element under control of the processor. When the processor executes the instruction stored in the memory, the execution enables the processor performs the method in any one of the third aspect or the possible implementations of the third aspect.

According to a fourteenth aspect, a terminal device is provided. The terminal device includes a processor, a memory, and a communications interface. The processor is connected to the memory and the communications interface. The memory is configured to store an instruction. The processor is configured to execute the instruction. The communications interface is configured to communicate with another network element under control of the processor. When the processor executes the instruction stored in the memory, the execution enables the processor to perform the method in any one of the fourth aspect or the possible implementations of the fourth aspect.

According to a fifteenth aspect, a terminal device is provided. The terminal device includes a processor, a memory, and a communications interface. The processor is connected to the memory and the communications interface. The memory is configured to store an instruction. The processor is configured to execute the instruction. The communications interface is configured to communicate with another network element under control of the processor. When the processor executes the instruction stored in the memory, the execution enables the processor to perform the method in any one of the fifth aspect or the possible implementations of the fifth aspect.

According to a sixteenth aspect, a computer readable storage medium is provided. The computer readable storage medium stores a program, and the program enables a network device to perform the cell handover method in any one of the first aspect and the implementations of the first aspect.

According to a seventeenth aspect, a computer readable storage medium is provided. The computer readable storage medium stores a program, and the program enables a network device to perform the cell handover method in any one of the second aspect and the implementations of the second aspect.

According to an eighteenth aspect, a computer readable storage medium is provided. The computer readable storage medium stores a program, and the program enables a terminal device to perform the cell handover method in any one of the third aspect and the implementations of the third aspect.

According to a nineteenth aspect, a computer readable storage medium is provided. The computer readable storage medium stores a program, and the program enables a terminal device to perform the cell handover method in any one of the fourth aspect and the implementations of the fourth aspect.

According to a twentieth aspect, a computer readable storage medium is provided. The computer readable storage medium stores a program, and the program enables a terminal device to perform the cell handover method in any one of the fifth aspect and the implementations of the fifth aspect.

According to a twenty-first aspect, a computer program product including an instruction is provided. When the computer program product is run on a computer, the computer is enabled to perform the method in any one of the foregoing aspects and the possible implementations of the foregoing aspects.

According to a twenty-second aspect, a system chip is provided, and the system chip includes an input/output interface, at least one processor, at least one memory, and a bus. The at least one memory is configured to store an instruction, and the at least one processor is configured to invoke the instruction of the at least one memory to perform the operations in the methods according to the foregoing aspects.

### BRIEF DESCRIPTION OF DRAWINGS

FIG 1 is a schematic structural diagram of a communications system to which a communication method in an embodiment of this application is applied;
FIG 2 is a schematic interaction diagram of a cell handover method according to an embodiment of this application;
FIG 3 is a schematic interaction diagram of a cell handover method according to another embodiment of this application;
FIG 4 is a schematic interaction diagram of an example according to an embodiment of this application;
FIG 5 is a schematic flowchart of a cell handover method according to another embodiment of this application;
FIG 6 is a schematic flowchart of a cell handover method according to still another embodiment of this application;
FIG. 7 is a schematic block diagram of a network device according to an embodiment of this application;
FIG. 8 is a schematic block diagram of another network device according to an embodiment of this application;
FIG. 9 is a schematic block diagram of a terminal device according to an embodiment of this application;
FIG. 10 is a schematic block diagram of a terminal device according to another embodiment of this application;
FIG. 11 is a schematic block diagram of a terminal device according to still another embodiment of this application;
FIG. 12 is a structural block diagram of a network device according to an embodiment of this application;
FIG. 13 is a structural block diagram of another network device according to an embodiment of this application;
FIG. 14 is a structural block diagram of a terminal device according to an embodiment of this application;
FIG. 15 is a structural block diagram of a terminal device according to an embodiment of this application;
FIG. 16 is a structural block diagram of a terminal device according to an embodiment of this application;
FIG. 17 is a schematic block diagram of a communications apparatus according to an embodiment of this application;
FIG. 18 is another schematic block diagram of a communications apparatus according to an embodiment of this application; and
FIG. 19 is still another schematic block diagram of a communications apparatus according to an embodiment of this application.

### DESCRIPTION OF EMBODIMENTS

The following describes technical solutions of this application with reference to accompanying drawings.

It should be understood that the technical solutions in the embodiments of this application may be applied to various communications systems, for example, an existing communications system such as a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), and a universal mobile telecommunications system (universal mobile telecommunication system, UMTS), and in particular, to a future 5G new radio (new radio, NR) system, a 5G system, or a communications system based on an orthogonal frequency division multiplexing (orthogonal frequency division multiplexing, OFDM) technology.

It should be further understood that, in the embodiments of this application, a network device may be referred to as a network device side, a base station, or the like, and the base station may be a base transceiver station (base transceiver station, BTS) in the GSM or CDMA, may be a NodeB (NodeB) in the WCDMA, may be an evolved NodeB (evolutional NodeB, eNB or eNodeB) in the LTE, or may be a base station device gNB in a future 5G network. This is not limited in this application.

It should be further understood that, in the embodiments of this application, a terminal device may communicate with one or more core networks (core network) by using a radio access network (radio access network, RAN), and the terminal device may be referred to as an access terminal, user equipment (user equipment, UE), a subscriber unit, a subscriber station, a mobile station, a mobile console, a remote station, a remote terminal, a mobile device, a user terminal, a terminal, a wireless communications device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in the future 5G network, or the like.

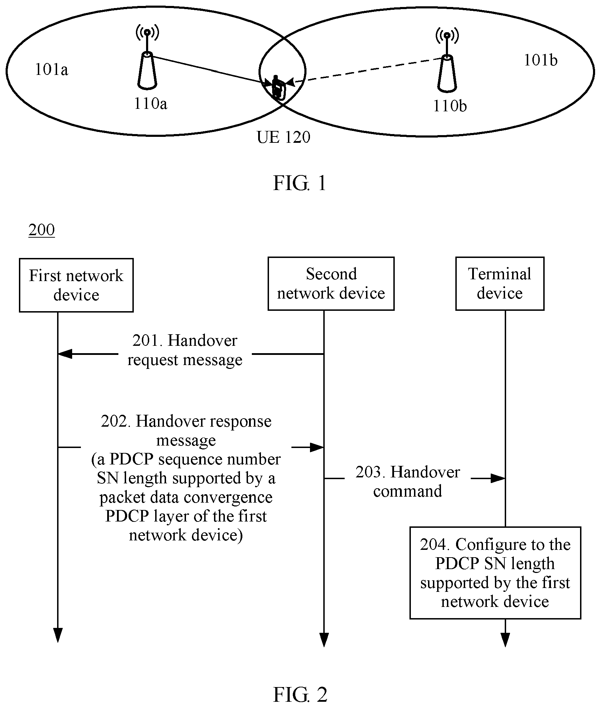

FIG. 1 is a schematic structural diagram of a communications system to which a communication method in an embodiment of this application is applied. The communications system in FIG. 1 includes a source base station 110a that controls a serving cell 101a, a target base station 110b that controls a target cell 101b, and UE 120. However, quantities of source base stations 110a, target base stations 110b and UEs 120 in the communications system are not limited in the present invention.

The serving cell is a current serving cell of the UE 120. In a connected state, a communication link is established between the source base station 110a and the UE 120, and the communications link is being used for a call and/or data transmission.

The source base station 110a sends a handover command to the UE 120 when determining, based on a received measurement report reported by the UE 120, that the UE 120 needs to hand over from the serving cell to the target cell, and that the target base station 110b agrees on handover of the UE 120. After receiving the handover command, the UE 120 starts handover from the serving cell 101a to the target cell 101b.

In the handover scenario in FIG. 1, different sequence number (sequence number, SN) lengths at packet data convergence protocol (packet data convergence protocol, PDCP) layers may be configured in the current serving cell and the target cell. For example, a maximum SN number length set at a PDCP layer of the target base station 110b is 12 bits (bit), and a maximum SN number length set at a PDCP layer of the source base station 110a is 15 bits. A main function of the SN number is as follows: the SN number is used as a number of a PDCP PDU to perform packet assembly on a PDCP SDU in a sending process at the PDCP layer. In this way, a receive end may perform PDCP sorting based on the SN number, or determines whether a PDCP PDU is lost, or calculates a hyper frame number. For example, after a received SN number reaches a maximum value, the hyper frame number is increased by one. A problem of a mismatch between SN lengths before and after the cell handover is specifically that the maximum length of the SN number set at the PDCP layer of the target base station 110b is less than the maximum length of the SN number set at the PDCP layer of the source base station 110a. Consequently, the target base station cannot identify the SN number of the source base station. Therefore, the target base station cannot perform an operation such as retransmission. For example, a maximum value of the SN number supported by the target base station is 4095 (that is, 2¹²-1). When a PDU, whose PDCP SN number is 4098, of the source base station is lost, a PDCP status report sent to the target base station displays that 4098 is lost, but the target base station cannot identify the SN number whose value is 4098. This affects data transmission reliability. Therefore, a method needs to be proposed to resolve the problem of the mismatch between SN lengths before and after the cell handover.

FIG. 2 is a schematic interaction diagram of a cell handover method 200 according to an embodiment of this application. For example, a terminal device in FIG. 2 may be the UE 120 in FIG. 1, a first network device in FIG. 2 may be the target base station 110b in FIG. 1, and a second network device in FIG. 2 may be the source base station 110a in FIG. 1. As shown in FIG. 2, the method 200 includes the following steps.

S201. The second network device sends a handover request message to the first network device, where the handover request message is used to request to hand over the terminal device from the second network device to the first network device.

Optionally, the handover request message may include a PDCP SN length supported by a PDCP layer of the second network device.

Optionally, the handover request message may further include indication information and/or time information of a handover condition of the terminal device, and the time information is about time required for the terminal device to hand over based on the handover condition.

Optionally, before step S201, the second network device may send measurement configuration information to the terminal device. Correspondingly, after finishing measurement, the terminal device sends a measurement report to the second network device.

Optionally, the second network device obtains first information, where the first information includes a PDCP SN length supported by a PDCP layer of the first network device.

Optionally, the first information may be obtained by the second network device from a core network device. For example, the first network device receives the first information sent by a mobility management network element (mobility management entity, MME).

Alternatively, the first information may also be included in a handover response message fed back by the first network device to the second network device, for example, handover request ACK information. Alternatively, the first information may be obtained in an open mobile architecture (open mobile architecture, OMA) case.

S202. The first network device sends the handover response message to the second network device, where the handover response message includes the PDCP sequence number SN length supported by the packet data convergence PDCP layer of the first network device.

Optionally, the handover response message may be ACK feedback information, that is, the terminal device is allowed to access a target cell.

Optionally, if the handover request message received by the first network device includes the PDCP SN length supported by the PDCP layer of the second network device, the first network device may add the PDCP SN length supported by the PDCP layer of the first network device to the handover response message.

Alternatively, optionally, if the handover request message received by the first network device includes the PDCP SN length supported by the PDCP layer of the second network device, and the first network device determines that the PDCP SN length supported by the PDCP layer of the first network device is less than the PDCP SN length supported by the PDCP layer of the second network device, the first network device may add the PDCP SN length supported by the PDCP layer of the first network device to the handover response message. For example, a maximum PDCP SN length supported by the PDCP layer of the second network device is 15 bits (bit), and a maximum PDCP SN length supported by the PDCP layer of the first network device is 12 bits.

Alternatively, optionally, if the first network device may obtain, from the core network, the PDCP SN number supported by the PDCP layer supported by the second network device, and the first network device determines that the PDCP SN length supported by the PDCP layer of the first network device is less than the PDCP SN length supported by the PDCP layer of the second network device, the first network device may add the PDCP SN length supported by the PDCP layer of the first network device in the handover response message. For example, a maximum length of the PDCP SN supported by the PDCP layer of the second network device is 15 bits (bit), and a maximum length of the PDCP SN supported by the PDCP layer of the first network device is 12 bits.

In other words, regardless of whether the handover request message received by the first network device includes the PDCP SN length supported by the PDCP layer of the second network device, the first network device may add the PDCP SN length supported by the PDCP layer of the first network device to the handover response message.

Optionally, the handover response message may further include indication information and/or time information of a handover condition of the terminal device, and the time information is about time required for the terminal device to hand over based on the handover condition.

S203. The second network device sends handover signaling to the terminal device based on the PDCP SN length supported by the PDCP layer of the first network device.

Optionally, the handover signaling includes a first indication. The first indication is used to instruct the terminal device to configure a packet data convergence PDCP sequence number SN length to the PDCP SN length supported by the PDCP layer of the first network device. The SN length supported by the PDCP layer of the first network device is less than the PDCP SN length supported by the PDCP layer of the second network device.

S204. The terminal device configures, according to the first indication, the PDCP SN length of the terminal device to the PDCP SN length supported by the first network device.

Optionally, the terminal device may configure the PDCP SN length only for new data. The new data may be received by the second network device from a serving gateway after the second network device sends a handover command; or may be received by the PDCP layer of the terminal device from an upper layer after the terminal device receives the handover command.

Optionally, the terminal device transmits data based on the PDCP SN length supported by the PDCP layer of the first network device. Herein, the "transmitting data" includes "sending and/or receiving data".

Optionally, the first indication may be a reset command. After receiving the reset command, the terminal device resets an HFN number.

Optionally, after receiving the handover command, the terminal device may reset a PDCP receive window size to a half of the PDCP SN length supported by the PDCP layer of the first network device.

Specifically, during cell handover, a source base station (for example, the second network device) sends a handover request message to a target base station (for example, the first network device). Optionally, the handover request message may include a PDCP SN length supported by a PDCP layer of the source base station. When receiving the handover request message, the target base station may send a handover response message to the source base station. The handover response message includes a PDCP SN length supported by a PDCP layer of the target base station. The PDCP SN length supported by the PDCP layer of the target base station is less than the PDCP SN length supported by the PDCP layer of the source base station. Then, the source base station may send a handover command to the terminal device. The handover command includes a first indication. The terminal device reconfigures the PDCP SN length according to the first indication. Then, the terminal device transmits data by using the reconfigured PDCP SN length, that is, the PDCP SN length supported by the target base station. This resolves a problem of a mismatch between SN lengths during the cell handover, which helps improve data transmission reliability.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

It should also be understood that in this embodiment of this application, numbers, such as "first" and "second" are introduced only to distinguish different objects, for example, to distinguish different network devices or to distinguish different indications. This does not impose a limitation on this embodiment of this application.

It should be further understood that the foregoing FIG. 2 shows only some steps in the handover scenario, and does not limit the protection scope of this embodiment of this application. In an actual handover scenario, there may be another possible interaction or step.

In this embodiment of this application, the second network device obtains the PDCP SN length supported by the PDCP layer of the first network device, and sends the handover command to the terminal device based on the PDCP SN length supported by the PDCP layer of the first network device, so that terminal device configures the PDCP sequence number SN length to the PDCP SN length supported by the PDCP layer of the first network device. This resolves the problem of the mismatch between SN lengths during the cell handover, which helps improve the data transmission reliability.

Optionally, that the terminal device transmits data based on the PDCP SN length supported by the PDCP layer of the first network device specifically includes:
determining, by the terminal device, a data protocol data unit PDU SN number or a hyper frame number HFN number of the data by using the PDCP SN length supported by the PDCP layer of the first network device; and transmitting the data by using the PDU SN number or the HFN number of the data.

For example, after configuring the PDCP SN length supported by the PDCP layer of the target base station, the terminal device may determine a PDU SN number or a hyper frame number HFN number of data by using the PDCP SN length supported by the PDCP layer of the target base station, and then transmits the data by using the PDU SN number or the hyper frame number HFN number. Optionally, the data is new data.

Optionally, the method 200 may further include:
obtaining, by the terminal device, the handover condition.

Optionally, the terminal device may obtain the handover condition by using the handover command; the terminal device obtains the handover condition by using a measurement configuration message delivered by the second network device; or the terminal device obtains the handover condition by using an RRC connection reconfiguration message delivered by the second network device. This is not limited herein.

It should be noted that if the measurement configuration information received by the terminal device includes a list of a plurality of cells, or if the terminal device finds, when performing measurement, that a plurality of cells meet the handover condition, the terminal device selects a target cell from the plurality of cells. Signal quality of the target cell may be the best in the plurality of cells, or a signal of the target cell may be the most stable in the plurality of cells (for example, signal quality strength is higher than a preset threshold in a preset time period). For example, the preset condition is an A3 event, where the A3 event means that the signal quality of the target cell is greater than a threshold of a serving cell, that is, the target cell is greater than the threshold of the serving cell in a predetermined time period. Whether signal quality of a cell is the best can be determined by using at least one of the following parameters: a reference signal received power (reference signal receiving power, RSRP) value, a reference signal received quality (reference signal receiving quality, RSRQ) value, a received signal strength indicator (received signal strength indication, RSSI) value, and the like.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

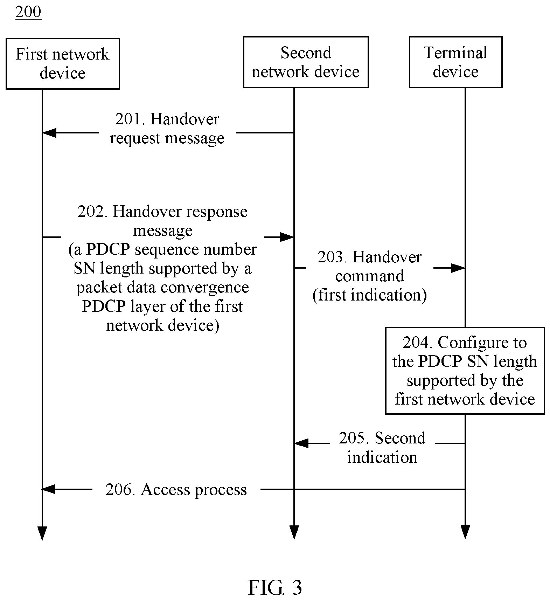

Optionally, as shown in FIG. 3, the method 200 may further include the following steps.

S205. When the terminal device meets the handover condition, the terminal device sends a second indication to the second network device, where the second indication is used to notify the second network device that the terminal device is to hand over to the first network device; and performs a process of access to the first network device.

Specifically, when determining that the handover condition is met, the terminal device may send the second indication to the second network device, where the second indication is used to notify the second network device that the terminal device is to hand over to the first network device, and may further perform the process of access to the first network device.

For example, the second indication may be channel state information (channel status information, CSI), scheduling request (scheduling request, SR) information, uplink sounding reference signal (sounding reference signal, SRS) information, or reserved sequence preamble information, such as a preamble allocated to the first network device for use; may be a medium access control control element (medium access control control element, MAC CE); or may be a special physical layer signal.

The terminal device may perform the process of access to the first network device in a plurality of manners. For example, the process is a random access process. For another example, the terminal device sends uplink data to the first network device by using a reserved uplink grant resource, where the reserved uplink grant resource may be obtained by the terminal device by using the handover command sent on the second network device.

Correspondingly, in step S206, the first network device receives a random access sequence or data sent by the terminal device.

Optionally, after receiving the handover request message sent by the second network device, the first network device may open or reserve a time window in advance, and then receive, in the time window, the random access preamble sequence or data sent by the terminal device. Optionally, if the first network device does not receive, in the time window, the random access preamble sequence or data sent by the terminal device, the terminal device does not access the target cell by default.

Optionally, the time window may be a first timer. For example, the first network device receives, during running of the first timer, the random access sequence or data sent by the terminal device.

Optionally, duration of the first timer may be determined by the first network device based on time information in the handover condition. The time information is the time required for the terminal device to hand over based on the handover condition. Optionally, running duration of the first timer may be greater than the time required for the terminal device to hand over based on the handover condition, so that the terminal device can hand over to the target cell.

Therefore, the second network device obtains the PDCP SN length supported by the PDCP layer of the first network device, and sends the handover command to the terminal device based on the PDCP SN length supported by the PDCP layer of the first network device, so that the terminal device configures the PDCP sequence number SN length to the PDCP SN length supported by the PDCP layer of the first network device. This resolves the problem of the mismatch between SN lengths during the cell handover, which helps improve the data transmission reliability.

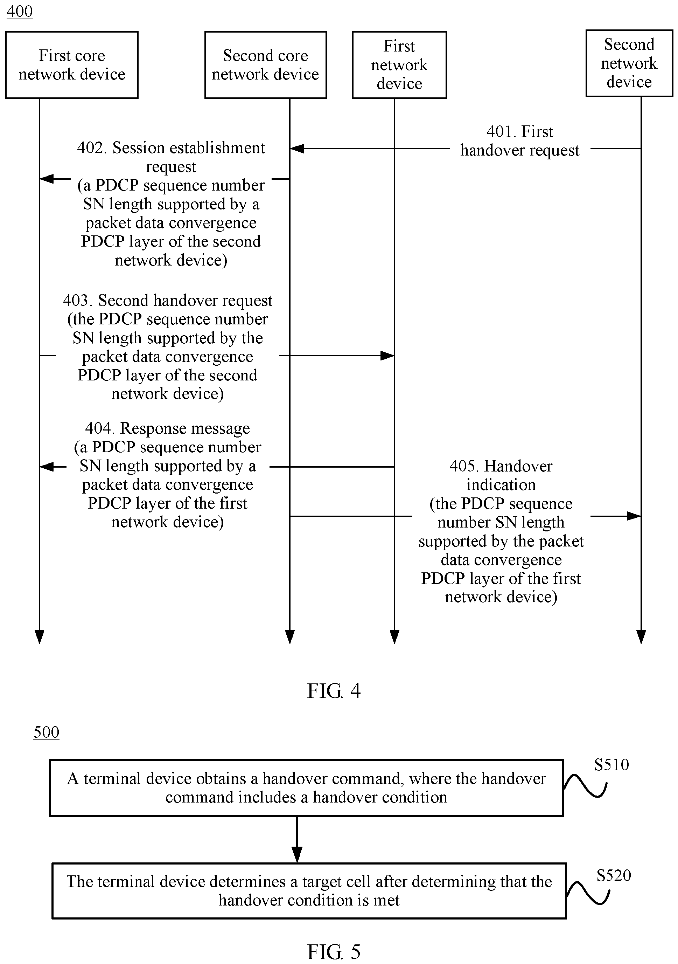

The following describes, with reference to FIG. 4, a case in which the first information is obtained by the second network device from a core network device (such as an MME) in this embodiment of this application. FIG. 4 is a schematic diagram of an example according to an embodiment of this application. As shown in FIG. 4, the method 400 includes the following steps.

401. The second network device sends a first handover request to a second core network device (for example, a source MME).

402. The second core network device sends a session establishment request to a first core network device (for example, a target MME).

The session establishment request includes the PDCP SN length supported by the PDCP layer of the second network device.

403. The first core network device sends a second handover request to the first network device.

The handover request includes the PDCP SN length supported by the PDCP layer of the second network device.

404. The first network device sends a response message to the first core network device.

The response message includes the PDCP SN length supported by the PDCP layer of the first network device.

405. The second core network device sends a handover indication to the second network device.

The handover indication includes the PDCP SN length supported by the PDCP layer of the first network device. For example, the handover indication may carry the first information.

In conclusion, the second network device may obtain, by using the second core network device, the PDCP SN length supported by the PDCP layer of the first network device.

It should be understood that FIG. 4 only provides an example of possible steps in a handover scenario, and does not limit the protection scope of this embodiment of this application. A person skilled in the art may learn another step in the handover scenario.

The foregoing describes the method according to the embodiment of this application with reference to FIG. 1 to FIG. 4. The following describes an apparatus according to an embodiment of this application.

This application further provides an embodiment in which a terminal device selects a proper target cell after a handover condition is met. It should be understood that this embodiment may be separately implemented, or may be implemented with reference to the foregoing method 200. This is not limited herein. The following provides description with reference to FIG. 5. FIG. 5 is a schematic diagram of a method 500 according to another embodiment of this application. As shown in FIG. 5, the method 500 includes the following steps.

S510. A terminal device obtains a handover command, where the handover command includes a handover condition.

S520. The terminal device determines a target cell after determining that the handover condition is met.

Optionally, the terminal device determines the target cell in a plurality of cells. The plurality of cells may be a plurality of cells included in measurement configuration information; may be a plurality of cells that meet the handover condition and that are discovered by the terminal after the terminal receives the handover command; or may be a target cell list included in the handover command. This is not limited herein.

Optionally, the terminal device obtains measurement configuration information, where the measurement configuration information includes a plurality of cells that meet the handover condition.

Specifically, if the measurement configuration information received by the terminal device includes a list of a plurality of cells, or if the terminal device finds, when performing measurement, that a plurality of cells meet the handover condition, the terminal device selects a target cell from the plurality of cells. Signal quality of the target cell may be the best in the plurality of cells, or a signal of the target cell may be the most stable in the plurality of cells (for example, signal quality strength is higher than a preset threshold in a preset time period). For example, the preset condition is an A3 event, where the A3 event means that the signal quality of the target cell is greater than a threshold of a serving cell, that is, the target cell is greater than the threshold of the serving cell in a predetermined time period. Whether signal quality of a cell is the best can be determined by using at least one of the following parameters: a reference signal received power (reference signal receiving power, RSRP) value, a reference signal received quality (reference signal receiving quality, RSRQ) value, a received signal strength indicator (received signal strength indication, RSSI) value, and the like.

Optionally, the terminal device obtains the handover condition by using a measurement configuration message delivered by a source network device; or the terminal device obtains the handover condition by using an RRC connection reconfiguration message delivered by a source network device. This is not limited herein.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

Therefore, if the terminal device finds, when performing measurement, that a plurality of cells meet the handover condition, the terminal device selects a target cell from the plurality of cells. Signal quality of the target cell may be the best in the plurality of cells, or a signal of the target cell may be the most stable in the plurality of cells.

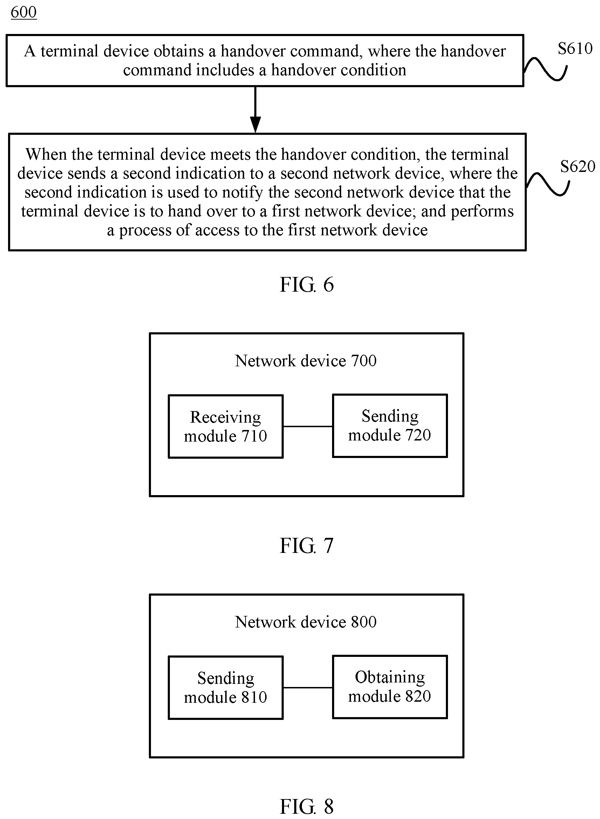

This application further provides an embodiment in which a terminal device selects a proper target cell after a handover condition is met. It should be understood that this embodiment may be separately implemented, or may be implemented with reference to the method 200 or the method 500. This is not limited herein. The following provides description with reference to FIG. 6. FIG. 6 is a schematic diagram of a method 600 according to another embodiment of this application. As shown in FIG. 6, the method 600 includes the following steps.

S610. A terminal device obtains a handover command, where the handover command includes a handover condition.

S620. When the terminal device meets the handover condition, the terminal device sends a second indication to a second network device, where the second indication is used to notify the second network device that the terminal device is to hand over to a first network device; and performs a process of access to the first network device. The second network device is a source network device, and the first network is set as a target network device.

Optionally, the second indication may be CSI information, SR information, SRS information, or reserved sequence preamble information, such as a preamble allocated to the first network device for use; may be a MAC CE indication; or may be a special physical layer signal.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

It should be understood that for some terms involved herein, refer to definitions in the foregoing method 200. Details are not described herein again.

Therefore, the terminal device may send the second indication to the second network device when determining that the handover condition is met, so that the second network device learns that the terminal device is to hand over to the second network device. This avoids that the second network device keeps waiting for access of the terminal device, thereby reducing power consumption of the second network device.

This embodiment of this application further provides a scheduling method, including:
adding, to a first information block, scheduling information of one or more second information blocks and a window length used to send system information.

A measurement unit of the window length used to send the system information is a scheduling granularity related to a cell sending a system message and/or to a physical characteristic of a carrier and/or a frequency in which the cell is located.

Alternatively, the measurement unit of the window length used to send the system information is carried in the system message.

Optionally, the window length used to send the system information may be configured by using at least one of the following granularities:
all system message blocks scheduled based on a window in the cell;
each system message block scheduled based on a window in the cell;
a plurality of system message blocks scheduled based on a window in the cell;
all system message blocks scheduled based on a window in a same area identity (area id);
each system message block scheduled based on a window in the same area identity (area id); and
a plurality of system message blocks scheduled based on a window in the same area identity (area id).

Optionally, the scheduling granularity related to the physical characteristic of the carrier and/or the frequency in which the cell is located is defined in a 3GPP protocol.

Optionally, the scheduling information of the second information block includes:
shortening a scheduling period and/or a retransmission period of the information block, and scheduling system information in the information block based on the shortened scheduling period and/or retransmission period; and
providing the scheduled system information to user equipment.

Optionally, the scheduling information of the second information block includes:
segmenting the system information block to obtain an information segment and at least one common segment, where a scheduling period and/or a retransmission period of the information segment are/is less than a scheduling period and/or a retransmission period of the common segment, and performing short period scheduling on the information segment based on the scheduling period and/or the retransmission period of the information segment.

Optionally, steps of the shortening a scheduling period and/or a retransmission period of the information block, and scheduling system information in the information block based on the shortened scheduling period and/or retransmission period are specifically as follows:
shortening the scheduling period and/or the retransmission period of the system information block, and performing short period scheduling on the system information block of the system information based on the shortened scheduling period and/or retransmission period; and
segmenting the system information block to obtain an information segment and at least one common segment, where a scheduling period and/or a retransmission period of the information segment are/is less than a scheduling period and/or a retransmission period of the common segment, and performing short period scheduling on the information segment based on the scheduling period and/or the retransmission period of the information segment.

Optionally, steps of the shortening a scheduling period and/or a retransmission period of the information block, and scheduling the information block based on the shortened scheduling period and/or retransmission period are specifically as follows:
shortening the scheduling period and/or the retransmission period of the system information block, and performing short period scheduling on the system information block of the system information based on the shortened scheduling period and/or retransmission period.

This embodiment of this application further provides another scheduling method, including:
adding, to a first information block, scheduling information of one or more second information blocks and a window length used to send system information.

A measurement unit of the window length used to send the system information is a scheduling granularity related to a cell sending the system information and/or to a physical characteristic of a carrier and/or a frequency in which the cell is located.

Alternatively, the measurement unit of the window length used to send the system information is carried in a system message.

The window length used to send the system information may be configured by using at least one of the following granularities:
all system message blocks scheduled based on a window in the cell;
each system message block scheduled based on a window in the cell;
a plurality of system message blocks scheduled based on a window in the cell;
all system message blocks scheduled based on a window in a same area identity (area id);
each system message block scheduled based on a window in the same area identity (area id); and
a plurality of system message blocks scheduled based on a window in the same area identity (area id).

The scheduling information of the second information block includes a sending period of the second information block.

A measurement unit of the sending period of the second information block is the scheduling granularity related to the cell sending the system message and/or the physical characteristic of the carrier and/or the frequency in which the cell is located.

Alternatively, the measurement unit of the sending period of the second information block is carried in the system message.

A sending period used to send the system information may be configured by using at least one of the following granularities:
all system message blocks scheduled based on a window in the cell;
each system message block scheduled based on a window in the cell;
a plurality of system message blocks scheduled based on a window in the cell;
all system message blocks scheduled based on a window in a same area identity (area id);
each system message block scheduled based on a window in the same area identity (area id); and
a plurality of system message blocks scheduled based on a window in the same area identity (area id).

The scheduling granularity related to the physical characteristic of the carrier and/or the frequency in which the cell is located is defined in a 3GPP protocol (such as 38.231, 38.221, or 38.211).

The scheduling information of the second information block includes:
shortening a scheduling period and/or a retransmission period of the information block, and scheduling system information in the information block based on the shortened scheduling period and/or retransmission period; and
providing the scheduled system information to user equipment.

The scheduling information of the second information block further includes: segmenting the system information block to obtain an information segment and at least one common segment, where a scheduling period and/or a retransmission period of the information segment are/is less than a scheduling period and/or a retransmission period of the common segment, and performing short period scheduling on the information segment based on the scheduling period and/or the retransmission period of the information segment.

In addition, steps of the shortening a scheduling period and/or a retransmission period of the information block, and scheduling system information in the information block based on the shortened scheduling period and/or retransmission period are specifically as follows:
shortening the scheduling period and/or the retransmission period of the system information block, and performing short period scheduling on the system information block of the system information based on the shortened scheduling period and/or retransmission period; and
segmenting the system information block to obtain an information segment and at least one common segment, where a scheduling period and/or a retransmission period of the information segment are less than a scheduling period and/or a retransmission period of the common segment, and performing short period scheduling on the information segment based on the scheduling period and/or the retransmission period of the information segment.

The base station may determine, based on a length, importance, a scheduling granularity, and/or cell signal quality of the information block, whether to segment the system information block.

Information about a segment of the system information block includes at least one of the following types of information:
a scheduling period and/or a retransmission period of a segmentation of the system information block;
a starting position of the segment of the system information block;
an ending position of the segment of the system information block;
a sequence number of the segment of the system information block;
a length of the segment of the system information block; and
whether there is still a segment of the system information block following the segment of the system information block.

In addition, steps of the shortening a scheduling period and/or a retransmission period of the information block, and scheduling the information block based on the shortened scheduling period and/or retransmission period are specifically as follows:
shortening a scheduling period and/or a retransmission period of the system information block, and performing short period scheduling on the system information block of the system information based on the shortened scheduling period and/or retransmission period.

A first information block includes scheduling information of one or more second information blocks and a window length used to send system information.

A measurement unit of the window length used to send the system information is a scheduling granularity related to a cell sending the system information and/or to a physical characteristic of a carrier and/or a frequency in which the cell is located.

Alternatively, the measurement unit of the window length used to send the system information is carried in a system message.

Optionally, the second information block carries scheduling information of one or more third information blocks.

The scheduling information of the second information block includes:
scheduling system information in the information block based on the shortened scheduling period and/or retransmission period; and
providing the scheduled system information to user equipment.

It should be understood that a physical characteristic of communication may be referred to as a numerology. The physical characteristic of communication corresponds to a set of different parameters used in a communications system. Different numerologies may correspond to different parameters. Including but not limited, the physical characteristic of communication is one or any combination of the following parameters: a subcarrier width, a cyclic prefix (cyclic prefix, CP) length, a transmission time interval (transmission time interval, TTI), a symbol (Symbol) quantity, a resource block (resource block, RB) position, a slot length, a frame format, and the like. For example, a reader may obtain a proposal R1-1613779 or R2-168012 from www.3gpp.org to understand a meaning of the physical characteristic of communication, namely, the numerology, and content of these proposals is included in content of this application. Because of fairness and openness of a 3GPP standard organization, details are not described herein.

The scheduling granularity related to the physical characteristic may be two time symbols, one time symbol, seven time symbols, one millisecond, or the like.

The scheduling granularity is related to the cell sending the system message and/or the physical characteristic in which the cell is located.

FIG. 7 is a schematic block diagram of a network device according to an embodiment of this application. As shown in FIG. 7, the network device 700 includes:
a receiving module 710, configured to receive a handover request message sent by a second network device, where the handover request message is used to request to hand over a terminal device from the second network device to the network device; and
a sending module 720, configured to send a handover response message to the second network device, where the handover response message includes a PDCP sequence number SN length supported by a packet data convergence PDCP layer of the network device.

Optionally, the handover request message includes a PDCP SN length supported by a PDCP layer of the first network device, where the SN length supported by the PDCP layer of the network device is less than a PDCP SN length supported by a PDCP layer of the second network device.

Optionally, the handover request message further includes indication information and/or time information of a handover condition of the terminal device, and the time information is information about time required for the terminal device to hand over based on the handover condition.

Optionally, the handover response message further includes indication information and/or time information of a handover condition of the terminal device, and the time information is information about time required for the terminal device to hand over based on the handover condition.

The network device 700 according to this embodiment of this application may perform the method on a first network device side in the cell handover method according to the embodiment of this application. The foregoing and other operations and/or functions of the modules in the network device 700 are separately used to implement corresponding procedures on the first network device side in the foregoing method 200. For brevity, details are not described herein again.

In this embodiment of this application, the network device 700 sends the handover response message to the second network device, where the handover response message includes the PDCP SN length supported by the PDCP layer of the network device 700, so that the second network device can send a handover command to the terminal device based on the PDCP SN length supported by the PDCP layer of the network device 700, and the terminal device configures a PDCP sequence number SN length to the PDCP SN length supported by the PDCP layer of the network device. This resolves a problem of a mismatch between SN lengths during cell handover, which helps improve data transmission reliability.

FIG. 8 is a schematic block diagram of a network device according to an embodiment of this application. As shown in FIG. 8, the network device 800 includes:
a sending module 810, configured to send a handover request message to a first network device, where the handover request message is used to request to hand over a terminal device from the network device to the first network device; and
an obtaining module 820, configured to obtain first information, where the first information includes a PDCP sequence number SN length supported by a packet data convergence PDCP layer of the first network device, where
the sending module 810 is further configured to send handover signaling to the terminal device based on the PDCP SN length supported by the PDCP layer of the first network device.

Optionally, in an embodiment, the obtaining module 820 is specifically configured to:
receive a handover response message sent by the first network device, where the handover response message includes the first information.

Optionally, the handover request message includes a PDCP SN length supported by a PDCP layer of the network device.

The obtaining module 820 is specifically configured to:
receive the handover response message sent by the first network device, where the SN length supported by the PDCP layer of the first network device is less than a PDCP SN length supported by a PDCP layer of the second network device.

Optionally, the handover request message further includes indication information and/or time information of a handover condition of the terminal device, and the time information is information about time required for the terminal device to hand over based on the handover condition.

Optionally, the handover signaling includes a first indication. The first indication is used to instruct the terminal device to configure a PDCP SN length to the PDCP SN length supported by the PDCP layer of the first network device. The SN length supported by the PDCP layer of the first network device is less than the PDCP SN length supported by the PDCP layer of the network device.

Optionally, the network device 800 further includes:
a receiving module, configured to receive a second indication sent by the terminal device, where the second indication is used by the terminal device to notify the network device that the terminal device is to hand over to the first network device.

The network device 800 according to this embodiment of this application may perform the method on a second network device side in the cell handover method according to the embodiment of this application. The foregoing and other operations and/or functions of the modules in the network device 800 are separately used to implement corresponding procedures of the foregoing methods. For brevity, details are not described herein again.

In this embodiment of this application, the network device 800 receives the handover response message sent by the first network device, where the handover message includes the PDCP SN length supported by the PDCP layer of the first network device, and can send a handover command to the terminal device based on the PDCP SN length supported by the PDCP layer of the first network device, so that the terminal device configures the PDCP sequence number SN length to the PDCP SN length supported by the PDCP layer of the first network device. This resolves a problem of a mismatch between SN lengths during cell handover, which helps improve data transmission reliability.

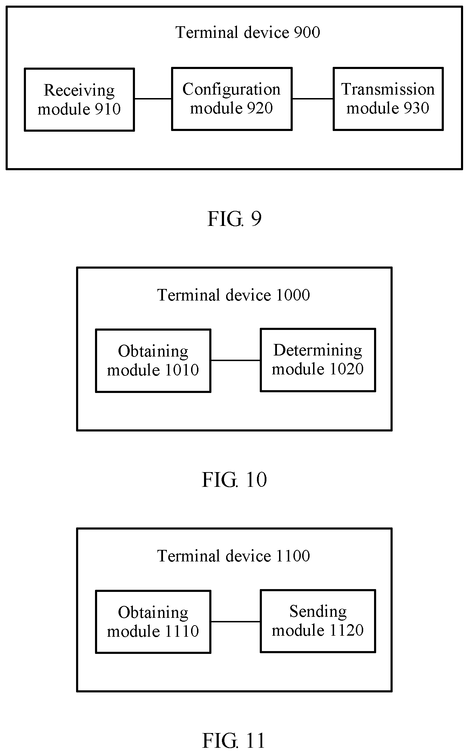

FIG. 9 is a schematic block diagram of a terminal device according to an embodiment of this application. As shown in FIG. 9, the terminal device 900 includes:
a receiving module 910, configured to receive handover signaling sent by a second network device, where the handover signaling includes a first indication, the first indication is used to instruct the terminal device to configure a packet data convergence PDCP sequence number SN length to a PDCP SN length supported by a PDCP layer of a first network device, and the SN length supported by the PDCP layer of the first network device is less than a PDCP SN length supported by a PDCP layer of the second network device;
a configuration module 920, configured to configure, according to the first indication, the PDCP SN length of the terminal device to the PDCP SN length supported by the PDCP layer of the first network device; and
a transmission module 930, configured to transmit data based on the PDCP SN length supported by the PDCP layer of the first network device.

Optionally, the terminal device 900 further includes:
a sending module, configured to send, a second indication to the second network device when the terminal device meets a handover condition, where the second indication is used to notify the second network device that the terminal device is to hand over to the first network device; and perform a process of access to the first network device.

Optionally, the terminal device 900 further includes:
an obtaining module, configured to obtain the handover condition.

Optionally, the handover condition includes at least one of the following conditions: signal quality strength of the first network device measured by the terminal device meets a preset threshold, a reference signal received power value of the first network device measured by the terminal device meets a preset value, and handover duration of the terminal device meets preset duration.

Optionally, the transmission module 930 is specifically configured to:
determine, by the terminal device, a data protocol data unit PDU SN number or a hyper frame number HFN number of the data by using the PDCP SN length supported by the PDCP layer of the first network device; and transmit the data by using the PDU SN number or the HFN number of the data.

The terminal device 900 according to this embodiment of this application may perform the method on a terminal device side in the cell handover method according to the embodiment of this application. The foregoing and other operations and/or functions of the modules in the terminal device 900 are separately used to implement corresponding procedures of the foregoing methods. For brevity, details are not described herein again.

In this embodiment of this application, the terminal device 900 receives a handover command sent by the second network device, where the handover command includes the first indication, and the first indication is used to instruct the terminal device to configure the packet data convergence PDCP sequence number SN length to the PDCP SN length supported by the PDCP layer of the first network device, so that the terminal device configures the PDCP sequence number SN length to the PDCP SN length supported by the PDCP layer of the first network device. This resolves a problem of a mismatch between SN lengths during cell handover, which helps improve data transmission reliability.

FIG. 10 is a schematic block diagram of a terminal device according to an embodiment of this application. As shown in FIG. 10, the terminal device 1000 includes:
an obtaining module 1010, configured to obtain measurement configuration information, where the measurement configuration information includes a plurality of cells that meet a handover condition; and
a determining module 1020, configured to determine a target cell in the plurality of cells.

Optionally, if the measurement configuration information received by the terminal device includes a list of a plurality of cells, or if the terminal device finds, when performing measurement, that the plurality of cells meet the handover condition, the terminal device selects a target cell from the plurality of cells. Signal quality of the target cell may be the best in the plurality of cells, or a signal of the target cell may be the most stable in the plurality of cells (for example, signal quality strength is higher than a preset threshold in a preset time period). For example, the preset condition is an A3 event, where the A3 event is that the signal quality of the target cell is greater than a threshold of a serving cell, that is, the target cell is greater than the threshold of the serving cell in a predetermined time period. Whether signal quality of a cell is the best can be determined by using at least one of the following parameters: a reference signal received power (reference signal receiving power, RSRP) value, a reference signal received quality (reference signal receiving quality, RSRQ) value, a received signal strength indicator (received signal strength indication, RSSI) value, and the like.

Optionally, the terminal device obtains the handover condition by using a measurement configuration message delivered by a source network device; or the terminal device obtains the handover condition by using an RRC connection reconfiguration message delivered by a source network device. This is not limited herein.

Optionally, the handover condition includes at least one of the following conditions:
signal quality strength of the first network device measured by the terminal device meets a preset threshold, a reference signal received power value of the first network device measured by the terminal device meets a preset value, and handover duration of the terminal device meets preset duration.

The terminal device 1000 according to this embodiment of this application may perform the method on a terminal device side in the cell handover method 500 according to the embodiment of this application. The foregoing and other operations and/or functions of the modules in the terminal device 1000 are separately used to implement corresponding procedures of the foregoing method 500, which can achieve a same effect. For brevity, details are not described herein again.

FIG. 11 is a schematic block diagram of a terminal device according to an embodiment of this application. As shown in FIG. 11, the terminal device 1100 includes:
an obtaining module 1110, configured to obtain a handover command, where the handover command includes a handover condition; and
a sending module 1120, configured to send a second indication to a second network device when the terminal device meets the handover condition, where the second indication is used to notify the second network device that the terminal device is to hand over to a first network device; and perform a process of access to the first network device. The second network device is a source network device, and the first network device is set as a target network device.

The terminal device 1100 in this embodiment may send the second indication to the second network device when determining that the handover condition is met, so that the second network device learns that the terminal device is to hand over to the second network device. This avoids that the second network device keeps waiting for access of the terminal device, thereby reducing power consumption of the second network device.

The terminal device 1100 according to this embodiment of this application may perform the method on a terminal device side in the cell handover method 600 according to the embodiment of this application. The foregoing and other operations and/or functions of the modules in the terminal device 1000 are separately used to implement corresponding procedures of the foregoing method 600, which can achieve a same effect. For brevity, details are not described herein again.

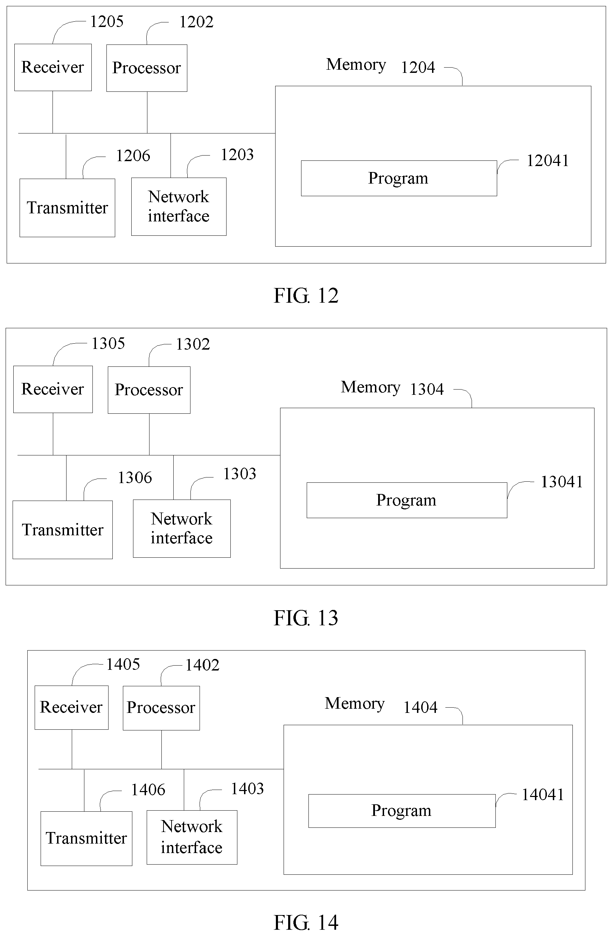

FIG. 12 shows a structure of a network device according to an embodiment of this application. The network device includes at least one processor 1202 (for example, a CPU), at least one network interface 1203 or another communications interface, and a memory 1204. Optionally, the network device may further include a receiver 1205 and a transmitter 1206. The processor 1202 is configured to execute an executable module, such as a computer program, stored in the memory 1204. The memory 1204 may include a high-speed random access memory RAM, or may include a non-volatile memory (non-volatile memory), for example, at least one magnetic disk memory. A communication connection to at least one another network element is implemented by using the at least one network interface 1203 (which may be a wired interface or a wireless interface). The receiver 1205 and the transmitter 1206 are configured to transmit various signals or information.

In some implementations, the memory 1204 stores a program 12041, and the program 12041 may be executed by the processor 1202, to perform the method on a first network device side in the foregoing embodiment of this application.

FIG. 13 shows a structure of a network device according to an embodiment of this application. The network device includes at least one processor 1302 (for example, a CPU), at least one network interface 1303 or another communications interface, and a memory 1304. Optionally, the network device may further include a receiver 1305 and a transmitter 1306. The processor 1302 is configured to execute an executable module, such as a computer program, stored in the memory 1304. The memory 1304 may include a high-speed random access memory RAM, or may include a non-volatile memory (non-volatile memory), for example, at least one magnetic disk memory. A communication connection to at least one another network element is implemented by using the at least one network interface 1303 (which may be a wired interface or a wireless interface). The receiver 1305 and the transmitter 1306 are configured to transmit various signals or information.

In some implementations, the memory 1304 stores a program 13041, and the program 13041 may be executed by the processor 1302, to perform the method on a second network device side in the foregoing embodiment of this application.

FIG. 14 shows a structure of a terminal device according to an embodiment of this application. The terminal device includes at least one processor 1402 (for example, a CPU), at least one network interface 1403 or another communications interface, and a memory 1404. Optionally, the terminal device may further include a receiver 1405 and a transmitter 1406. The processor 1402 is configured to execute an executable module, such as a computer program, stored in the memory 1404. The memory 1404 may include a high-speed random access memory RAM, or may include a non-volatile memory (non-volatile memory), for example, at least one magnetic disk memory. A communication connection to at least one another network element is implemented by using the at least one network interface 1403 (which may be a wired interface or a wireless interface). The receiver 1405 and the transmitter 1406 are configured to transmit various signals or information.

In some implementations, the memory 1404 stores a program 14041, and the program 14041 may be executed by the processor 1402, to perform the method on a terminal device side in the foregoing embodiment of this application.

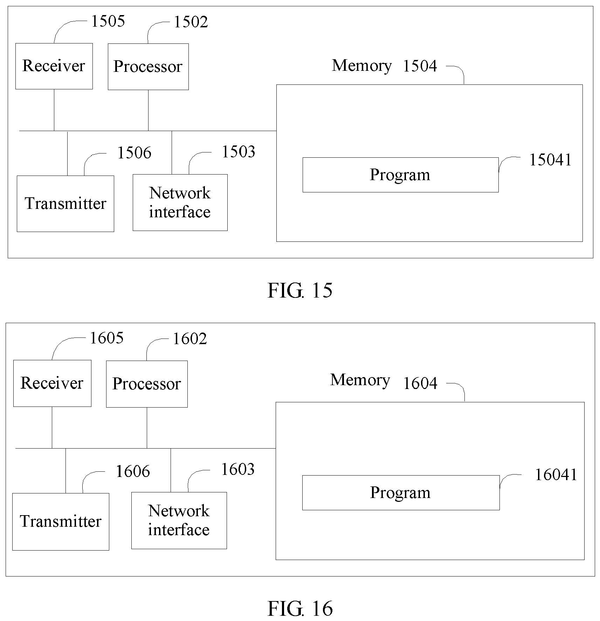

FIG. 15 shows a structure of a terminal device according to an embodiment of this application. The terminal device includes at least one processor 1502 (for example, a CPU), at least one network interface 1503 or another communications interface, and a memory 1504. Optionally, the terminal device may further include a receiver 1505 and a transmitter 1506. The processor 1502 is configured to execute an executable module, such as a computer program, stored in the memory 1504. The memory 1504 may include a high-speed random access memory RAM, or may include a non-volatile memory (non-volatile memory), for example, at least one magnetic disk memory. A communication connection to at least one another network element is implemented by using the at least one network interface 1503 (which may be a wired interface or a wireless interface). The receiver 1505 and the transmitter 1506 are configured to transmit various signals or information.

In some implementations, the memory 1504 stores a program 15041, and the program 15041 may be executed by the processor 1502, to perform the method on a terminal device side in the foregoing embodiment of this application.

FIG. 16 shows a structure of a terminal device according to an embodiment of this application. The terminal device includes at least one processor 1602 (for example, a CPU), at least one network interface 1603 or another communications interface, and a memory 1604. Optionally, the terminal device may further include a receiver 1605 and a transmitter 1606. The processor 1602 is configured to execute an executable module, such as a computer program, stored in the memory 1604. The memory 1604 may include a high-speed random access memory RAM, or may include a non-volatile memory (non-volatile memory), for example, at least one magnetic disk memory. A communication connection to at least one another network element is implemented by using the at least one network interface 1603 (which may be a wired interface or a wireless interface). The receiver 1605 and the transmitter 1606 are configured to transmit various signals or information.

In some implementations, the memory 1604 stores a program 16041, and the program 16041 may be executed by the processor 1602, to perform the method on a terminal device side in the foregoing embodiment of this application.

An embodiment of this application further provides a chip system. The chip system includes a processor, configured to support a distributed unit, a centralized unit, and a terminal device for implementing functions in the foregoing embodiments, for example, generating or processing data and/or information related to the foregoing method. In a possible design, the chip system further includes a memory. The memory is configured to store program instructions and data necessary to the distributed unit, the centralized unit, and the terminal device. The chip system may include a chip, or may include a chip and another discrete device. It should be understood that data and/or information processed by the chip may be received from a base station, and the processed data and/or information may be further sent to the base station.

An embodiment of this application further provides a communications apparatus. The communications apparatus may be a terminal device or a circuit. The communications apparatus may be configured to perform an action performed by the terminal device in the foregoing method embodiment.

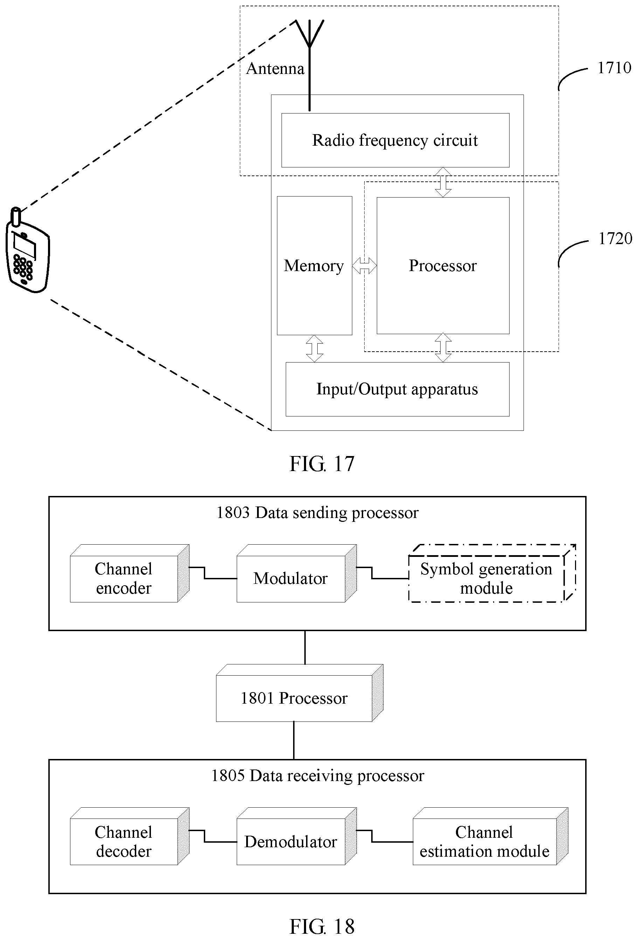

When the communications apparatus is the terminal device, FIG. 17 is a schematic structural diagram of a simplified terminal device. For ease of understanding and illustration, in FIG. 17, the terminal device is, for example, a mobile phone. As shown in FIG. 17, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal, and process the radio frequency signal. The antenna is mainly configured to transmit/receive the radio frequency signal in an electromagnetic wave form. The input/output apparatus, such as a touchscreen, a display screen, or a keyboard, is mainly configured to: receive data entered by a user and output data to the user. It should be noted that some types of terminal devices may not have the input/output apparatus.

When the processor needs to send data, the processor outputs a baseband signal to the radio frequency circuit, after performing baseband processing on the to-be-sent data. After performing radio frequency processing on the baseband signal, the radio frequency circuit sends the radio frequency signal to the outside in the electromagnetic wave form by using the antenna. When there is data sent to the terminal device, the radio frequency circuit receives the radio frequency signal by using the antenna, converts the radio frequency signal into a baseband signal, and outputs the baseband signal to the processor. The processor converts the baseband signal into data and processes the data. For ease of description, FIG. 17 shows only one memory and one processor. In an actual terminal device product, there may be one or more processors and one or more memories. The memory may also be referred to as a storage medium, a storage device, or the like. The memory may be disposed independently on the processor, or may be integrated with the processor. This is not limited in this embodiment of this application.

In this embodiment of this application, the antenna that has a transceiver function and the radio frequency circuit may be considered as a transceiver unit of the terminal device, and the processor that has a processing function may be considered as a processing unit of the terminal device. As shown in FIG. 17, the terminal device includes a transceiver unit 1710 and a processing unit 1720. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1710 and that is configured to implement a receiving function may be considered as a receiving unit, and a component that is in the transceiver unit 1710 and that is configured to implement a sending function may be considered as a sending unit. In other words, the transceiver unit 1710 includes the receiving unit and the sending unit. The transceiver unit may sometimes be referred to as a transceiver, a transceiver circuit, or the like. The receiving unit may sometimes be referred to as a receiver, a receiver circuit, or the like. The sending unit may sometimes be referred to as a transmitter, a transmitter circuit, or the like.

It should be understood that the transceiver unit 1710 is configured to perform a sending operation and a receiving operation on a terminal device side in the foregoing method embodiment, and the processing unit 1720 is configured to perform an operation other than the sending operation and the receiving operation of the terminal device in the foregoing method embodiment.

For example, in an implementation, the transceiver unit 1710 is configured to perform the receiving operation on the terminal device side in step 201 in FIG. 2, and/or the transceiver unit 1710 is further configured to perform another transceiver step on the terminal device side in the embodiment of this application. The processing unit 1720 is configured to perform step 204 in FIG. 2, and/or the processing unit 1720 is further configured to perform another processing step on the terminal device side in the embodiment of this application.

For another example, in another implementation, the transceiver unit 1710 is configured to perform the receiving action on the terminal device side in step 201 in FIG. 3, and the sending operations on the terminal device side in step 205 and step 206, and/or the transceiver unit 1720 is further configured to perform another transceiver step on the terminal device side in the embodiment of this application. The processing unit 1720 is configured to perform step 204 in FIG. 3, and/or the processing unit 1720 is further configured to perform another processing step on the terminal device side in the embodiment of this application.

For another example, in still another implementation, the transceiver unit 1710 is configured to perform another transceiver step on the terminal device side in the embodiment of this application. The processing unit 1720 is configured to perform the obtaining operation of the terminal device in step 510 and the determining operation of the terminal device in step 520 in FIG. 5, and/or the processing unit 1720 is further configured to perform another processing step on the terminal device side in the embodiment of this application.

For another example, in another implementation, the transceiver unit 1710 is configured to perform the sending operation on the terminal device side in step 620 in FIG. 6, and/or the transceiver unit 1710 is further configured to perform another transceiver step on the terminal device side in the embodiment of this application. The processing unit 1720 is configured to perform the obtaining operation of the terminal device in step 620 in FIG. 6, and/or the processing unit 1720 is further configured to perform another processing step on the terminal device side in the embodiment of this application.

When the communications apparatus is a chip, the chip includes a transceiver unit and a processing unit. The transceiver unit may be an input/output circuit or a communications interface. The processing unit is a processor, a microprocessor, or an integrated circuit that are integrated on the chip.

When the communications apparatus in this embodiment is a terminal device, refer to the device shown in FIG. 18. As an example, the device may perform functions similar to the functions of the processor 1402 in FIG. 14. In FIG. 18, the device includes a processor 1810, a data sending processor 1820, and a data receiving processor 1830. The configuration module 920 in the foregoing embodiment may be the processor 1810 in FIG. 18, and performs corresponding functions. The receiving module 910 and the transmission module 930 in the foregoing embodiment may be the data sending processor 1820 and/or the data receiving processor 1830 in FIG. 18. Although FIG. 18 shows a channel encoder, a channel decoder, a symbol generation module, and a channel estimation module, it may be understood that these modules are merely examples, and do not constitute a limiting description of this embodiment.

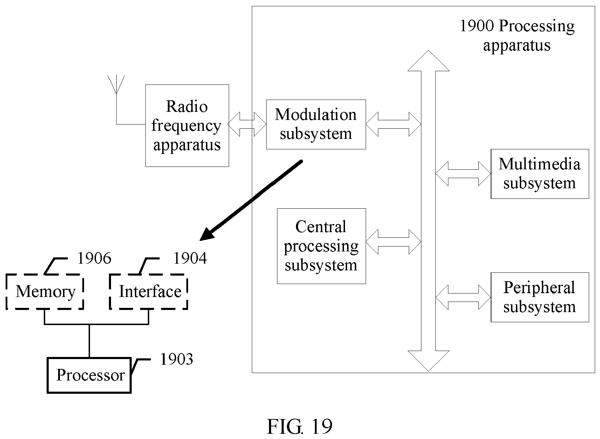

FIG. 19 shows another form of this embodiment. A processing apparatus 1900 includes modules such as a modulation subsystem, a central processing subsystem, and a peripheral subsystem. The communications apparatus in this embodiment may be used as the modulation subsystem. Specifically, the modulation subsystem may include a processor 1903 and an interface 1904. The processor 1903 completes the function of the configuration module 910, and the interface 1904 completes the functions of the receiving module 910 and the transmission module 930. In another variant, the modulation subsystem includes a memory 1906, a processor 1903, and a program that is stored in the memory 1906 and that can be run on the processor. When executing the program, the processor 1903 implements the method on a terminal device side in the foregoing method embodiment. It should be noted that the memory 1906 may be non-volatile, or may be volatile. A location of the memory 1906 may be located inside the modulation subsystem, or may be located in the processing apparatus 1900, provided that the memory 1906 can be connected to the processor 1903.

In another form of this embodiment, a computer readable storage medium is provided, and an instruction is stored on the computer readable storage medium. When the instruction is executed, the method on the terminal device side in the foregoing method embodiments is performed.

In another form of this embodiment, a computer program product including an instruction is provided. When the instruction is executed, the method on the terminal device side in the foregoing method embodiments is performed.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of the embodiments of this application shall be subject to the protection scope of the claims.

## Claims

1. A cell handover method, comprising:
receiving, by a first network device, a handover request message sent by a second network device, wherein the handover request message is used to request to hand over a communications device from the second network device to the first network device; and
sending, by the first network device, a handover response message to the second network device, wherein the handover response message comprises a PDCP sequence number SN length supported by a packet data convergence PDCP layer of the first network device.

2. The method according to claim 1, wherein the handover request message comprises a PDCP SN length supported by a PDCP layer of the second network device, and the SN length supported by the PDCP layer of the first network device is less than the PDCP SN length supported by the PDCP layer of the second network device.

3. The method according to claim 2, wherein the handover request message further comprises indication information and/or time information of a handover condition of the communications device, and the time information is information about time required for the communications device to hand over based on the handover condition.

4. The method according to claim 1 or 2, wherein the handover response message further comprises indication information and/or time information of a handover condition of the communications device, and the time information is information about time required for the communications device to hand over based on the handover condition.

5. A cell handover method, comprising:
sending, by a second network device, a handover request message to a first network device, wherein the handover request message is used to request to hand over a communications device from the second network device to the first network device;
obtaining, by the second network device, first information, wherein the first information comprises a PDCP sequence number SN length supported by a packet data convergence PDCP layer of the first network device; and
sending, by the second network device, handover signaling to the communications device based on the PDCP SN length supported by the PDCP layer of the first network device.

6. The method according to claim 5, wherein the obtaining, by the second network device, first information comprises:
receiving, by the second network device, a handover response message sent by the first network device, wherein the handover response message comprises the first information.

7. The method according to claim 6, wherein the handover request message comprises a PDCP SN length supported by a PDCP layer of the second network device; and
the receiving, by the second network device, a handover response message sent by the first network device comprises:
receiving, by the second network device, the handover response message sent by the first network device, wherein the SN length supported by the PDCP layer of the first network device is less than the PDCP SN length supported by the PDCP layer of the second network device.

8. The method according to claim 7, wherein the handover request message further comprises indication information and/or time information of a handover condition of the communications device, and the time information is information about time required for the communications device to hand over based on the handover condition.

9. The method according to any one of claims 5 to 8, wherein the handover signaling comprises a first indication, the first indication is used to instruct the communications device to configure a PDCP SN length to the PDCP SN length supported by the PDCP layer of the first network device, and the SN length supported by the PDCP layer of the first network device is less than the PDCP SN length supported by the PDCP layer of the second network device.

10. The method according to any one of claims 5 to 9, wherein the method further comprises:
receiving, by the second network device, a second indication sent by the communications device, wherein the second indication is used by the communications device to notify the second network device that the communications device is to hand over to the first network device.

11. A cell handover method, comprising:
receiving, by a communications device, handover signaling sent by a second network device, wherein the handover signaling comprises a first indication, the first indication is used to instruct the communications device to configure a packet data convergence PDCP sequence number SN length to a PDCP SN length supported by a PDCP layer of a first network device, and the SN length supported by the PDCP layer of the first network device is less than a PDCP SN length supported by a PDCP layer of the second network device;
configuring, by the communications device according to the first indication, the PDCP SN length of the communications device to the PDCP SN length supported by the PDCP layer of the first network device; and
transmitting, by the communications device, data based on the PDCP SN length supported by the PDCP layer of the first network device.

12. The method according to claim 11, wherein the method further comprises:
when the communications device meets a handover condition, sending, by the communications device, a second indication to the second network device, wherein the second indication is used to notify the second network device that the communications device is to hand over to the first network device; and performing a process of access to the first network device.

13. The method according to claim 12, wherein before the sending, by the communications device, a second indication to the second network device, the method further comprises:
obtaining, by the communications device, the handover condition.

14. The method according to claim 12 or 13, wherein the handover condition comprises at least one of the following conditions: signal quality strength of the first network device measured by the communications device meets a preset threshold, a reference signal received power value of the first network device measured by the communications device meets a preset value, and handover duration of the communications device meets preset duration.

15. The method according to any one of claims 11 to 14, wherein the transmitting, by the communications device, data based on the PDCP SN length supported by the PDCP layer of the first network device comprises:
determining, by the communications device, a data protocol data unit PDU SN number or a hyper frame number HFN number of the data by using the PDCP SN length supported by the PDCP layer of the first network device; and transmitting the data by using the PDU SN number or the HFN number of the data.

16. A network device, comprising:
a receiving module, configured to receive a handover request message sent by a second network device, wherein the handover request message is used to request to hand over a communications device from the second network device to the network device; and
a sending module, configured to send a handover response message to the second network device, wherein the handover response message comprises a PDCP sequence number SN length supported by a packet data convergence PDCP layer of the network device.

17. The network device according to claim 16, wherein the handover request message comprises a PDCP SN length supported by a PDCP layer of the first network device, and the SN length supported by the PDCP layer of the network device is less than a PDCP SN length supported by a PDCP layer of the second network device.

18. The network device according to claim 17, wherein the handover request message further comprises indication information and/or time information of a handover condition of the communications device, and the time information is information about time required for the communications device to hand over based on the handover condition.

19. The network device according to claim 16 or 17, wherein the handover response message further comprises indication information and/or time information of a handover condition of the communications device, and the time information is information about time required for the communications device to hand over based on the handover condition.

20. A network device, comprising:
a sending module, configured to send a handover request message to a first network device, wherein the handover request message is used to request to hand over a communications device from the network device to the first network device; and
an obtaining module, configured to obtain first information, wherein the first information comprises a PDCP sequence number SN length supported by a packet data convergence PDCP layer of the first network device, wherein
the sending module is further configured to send handover signaling to the communications device based on the PDCP SN length supported by the PDCP layer of the first network device.

21. The network device according to claim 20, wherein the obtaining module is specifically configured to:
receive a handover response message sent by the first network device, wherein the handover response message comprises the first information.

22. The network device according to claim 21, wherein the handover request message comprises a PDCP SN length supported by a PDCP layer of the second network device; and
the obtaining module is specifically configured to:
receive the handover response message sent by the first network device, wherein the SN length supported by the PDCP layer of the first network device is less than a PDCP SN length supported by a PDCP layer of the network device.

23. The network device according to claim 22, wherein the handover request message further comprises indication information and/or time information of a handover condition of the communications device, and the time information is information about time required for the communications device to hand over based on the handover condition.

24. The network device according to any one of claims 20 to 23, wherein the handover signaling comprises a first indication, the first indication is used to instruct the communications device to configure a PDCP SN length to the PDCP SN length supported by the PDCP layer of the first network device, and the SN length supported by the PDCP layer of the first network device is less than the PDCP SN length supported by the PDCP layer of the network device.

25. The network device according to any one of claims 20 to 24, wherein the network device further comprises:
a receiving module, configured to receive a second indication sent by the communications device, wherein the second indication is used by the communications device to notify the network device that the communications device is to hand over to the first network device.

26. A communications device, comprising:
a receiving module, configured to receive handover signaling sent by a second network device, wherein the handover signaling comprises a first indication, the first indication is used to instruct the communications device to configure a packet data convergence PDCP sequence number SN length to a PDCP SN length supported by a PDCP layer of a first network device, and the SN length supported by the PDCP layer of the first network device is less than a PDCP SN length supported by a PDCP layer of the second network device;
a configuration module, configured to configure, according to the first indication, the PDCP SN length of the communications device to the PDCP SN length supported by the PDCP layer of the first network device; and
a transmission module, configured to transmit data based on the PDCP SN length supported by the PDCP layer of the first network device.

27. The communications device according to claim 26, wherein the communications device further comprises:
a sending module, configured to send a second indication to the second network device when the communications device meets a handover condition, wherein the second indication is used to notify the second network device that the communications device is to hand over to the first network device; and perform a process of access to the first network device.

28. The communications device according to claim 27, wherein the communications device further comprises:
an obtaining module, configured to obtain the handover condition.

29. The communications device according to claim 27 or 28, wherein the handover condition comprises at least one of the following conditions: signal quality strength of the first network device measured by the communications device meets a preset threshold, a reference signal received power value of the first network device measured by the communications device meets a preset value, and handover duration of the communications device meets preset duration.

30. The communications device according to any one of claims 26 to 29, wherein the transmission module is specifically configured to:
determine a data protocol data unit PDU SN number or a hyper frame number HFN number of the data by using the PDCP SN length supported by the PDCP layer of the first network device; and transmit the data by using the PDU SN number or the HFN number of the data.

31. A computer readable storage medium, wherein the computer readable storage medium stores a computer program, and when the program is executed by a processor, the cell handover method according to any one of claims 1 to 4 is implemented.

32. A computer readable storage medium, wherein the computer readable storage medium stores a computer program, and when the program is executed by a processor, the cell handover method according to any one of claims 5 to 10 is implemented.

33. A computer readable storage medium, wherein the computer readable storage medium stores a computer program, and when the program is executed by a processor, the cell handover method according to any one of claims 11 to 15 is implemented.

34. A communications apparatus, comprising a memory, a processor, and a program that is stored in the memory and that is run on the processor, wherein when the processor executes the program, the cell handover method according to any one of claims 1 to 4 is implemented.

35. A communications apparatus, comprising a memory, a processor, and a program that is stored in the memory and that is run on the processor, wherein when the processor executes the program, the cell handover method according to any one of claims 5 to 10 is implemented.

36. A communications apparatus, comprising a memory, a processor, and a program that is stored in the memory and that is run on the processor, wherein when the processor executes the program, the cell handover method according to any one of claims 11 to 15 is implemented.
